# FASCICULE DE BREVET EUROPEEN

(11) **EP 2 346 157 B1**
(45) Date de publication et mention de la délivrance du brevet: **22.08.2012**
(21) Numéro de dépôt: 10354081.1
(22) Date de dépôt: 26.11.2010
(51) Int. Cl.: H02P 1/40, H02P 25/18, H01H 1/36, H01H 1/42, H01H 19/36, H01H 19/38, H02P 1/02, H02P 1/42

(54) **Dispositif d'inversion de phases à pinces**
Klemmvorrichtung zum PHASENUMkehr
pincer type phase inversion device

(30) Priorité: 18.12.2009 FR 0906165; 18.12.2009 FR 0906166
(43) Date de publication de la demande: 20.07.2011
(73) Titulaire: Schneider Electric Industries SAS, 92500 Rueil-Malmaison (FR)
(72) Inventeur: Guinda, Santos, 38050 Grenoble Cedex 09 (FR); Le Youdec, Gérald, 38050 Grenoble Cedex 09 (FR); Le Callonnec, Patrick, 38050 Grenoble Cedex 09 (FR); Lbrozek, Arnaud, 38050 Grenoble Cedex 09 (FR); Dedina, Grégory, 38050 Grenoble Cedex 09 (FR)
(74) Mandataire: Péru, Laurence

(56) Documents cités:
- US-A- 2 830 148
- US-A- 5 969 308
- US-A1- 2005 174 078

## Description

### DOMAINE TECHNIQUE

L'invention concerne un dispositif permettant l'inversion du sens de marche d'un moteur électrique triphasé en inversant la connexion entre deux phases. Plus généralement, l'invention a trait à un dispositif mécanique d'inversion de la connexion entre paires de conducteurs.

### ETAT DE LA TECHNIQUE

Pour respecter leurs limites de fonctionnement, les moteurs sont associés à des systèmes de protection qui permettent, par exemple, d'isoler le moteur du réseau en actionnant un organe de coupure en cas de détection d'un court-circuit ou d'une surcharge. Des fusibles, disjoncteurs, relais de surcharge, ou des appareils offrant conjointement plusieurs types de protection ont ainsi été développés pour être associés aux départs des moteurs.

Par ailleurs, dans un moteur électrique triphasé, le sens de rotation du moteur est déterminé par la séquence des phases de la source d'alimentation électrique. Or, dans certaines applications, le moteur doit pouvoir fonctionner dans les deux sens, par exemple pour une vanne ou une pompe, un convoyeur ou un ascenseur, ou autre machine-outil. Pour obtenir le sens souhaité de démarrage du moteur, des dispositifs ont été conçus afin d'inverser la connexion entre deux des phases, la troisième restant inchangée.

Une solution est ainsi l'intégration de la fonction d'inversion dans le dispositif de commutation ou de protection : deux contacteurs/disjoncteurs conventionnels sont associés à l'aide d'une condamnation mécanique les verrouillant l'un et l'autre afin que l'activation simultanée des deux contacteurs soit interdite : voir par exemple FR 2 373 320. Cette solution nécessite cependant un nombre de pièces important, avec doublement des dispositifs de coupure et système de verrouillage.

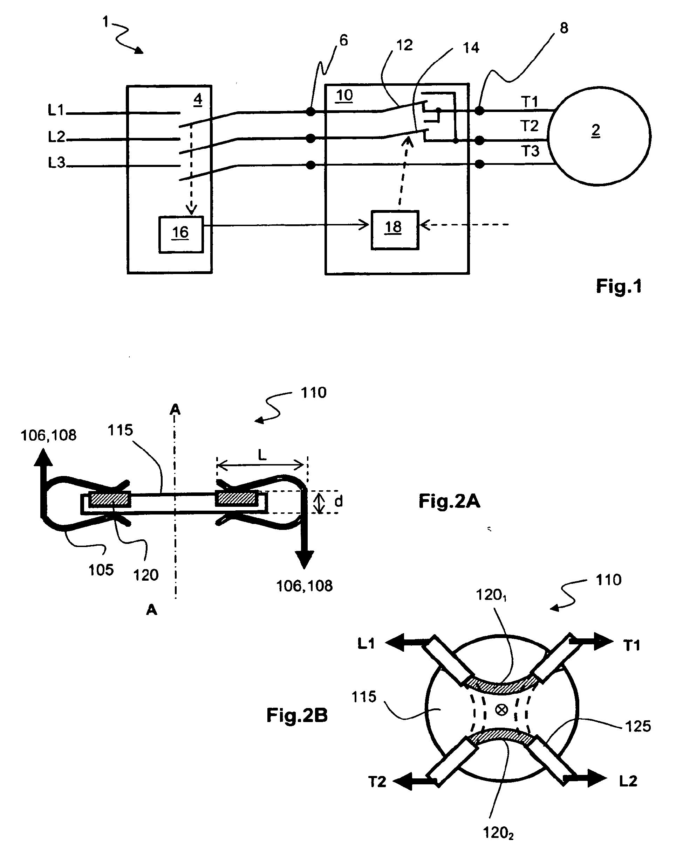

Pour la plupart des utilisations, le dispositif de coupure qui assure le démarrage et la protection du moteur est conservé, simplement associé en aval à un dispositif inverseur de phases (voir par exemple FR 2 586 325) ; il importe alors que le dispositif d'inversion n'empêche pas le redémarrage après activation des moyens de coupure et correction du défaut. En référence à la figure 1, le circuit 1 d'alimentation triphasée L1, L2, L3 du moteur 2, qui est muni dans le cadre illustré d'un dispositif de coupure amont 4, comprend trois bornes 6 de raccordement sur lesquels viennent se connecter trois bornes 8 du moteur 2 alimentant chacune des phases T1, T2, T3. Pour permettre une inversion du sens de rotation du moteur 2, un dispositif 10 inverseur se raccorde aux bornes 6, 8 de chaque ligne, et comprend des contacts 12, 14 à double ou simple coupure qui permettent, en fonction de leur position, de croiser deux des trois phases L1, L2 et T1, T2, l'une des phases L3-T3 étant conservée.

Pour interdire l'inversion des phases sous charge, l'inverseur 10 est usuellement commandé par des contacts auxiliaires 16 du dispositif de coupure 4 présent en amont et dont la position autorise ou non la commande 18 de l'inversion de phase, c'est-à-dire du mouvement des contacts 12, 14.

Pour assurer le passage du courant nominal du départ moteur et les tenues aux chocs et vibrations, les contacts 12, 14 du dispositif d'inversion 10 peuvent être munis de pastilles d'argent, et ils sont classiquement asservis par des ressorts. Qui plus est, comme les courants de forte intensité, et notamment les courants de court-circuit, ont tendance à écarter les pôles reliant les lignes d'alimentation L et de transmission T, pour assurer le fonctionnement en court-circuit, les contacts 12, 14 sont également pourvus d'un dispositif électromagnétique qui, sous l'effet du passage du courant de court-circuit entraîne une augmentation de la pression sur les contacts d'inversion de phases : voir par exemple FR 2 795 226. Cette architecture nécessite ainsi un grand nombre de pièces et induit, de fait, un coût de revient élevé. Art antérieur est aussi connu de US 2 830 148.

### EXPOSE DE L'INVENTION

Parmi autres avantages, l'invention vise à optimiser la conception de dispositifs inverseurs de phase et notamment à diminuer le nombre de pièces afin de réduire leur coût. En dépit de cette simplification dans la conception, l'invention vise à conserver la tenue de l'inverseur à des courts-circuits de 10 kA, voire 50 kA, et notamment à tolérer des passages de courant de court-circuit pendant 2,5 ms.

Un dispositif inverseur selon l'invention comprend ainsi au moins deux bornes d'entrée de deux bornes de sortie qui sont reliées à un ensemble d'inversion ; une troisième borne d'entrée et une troisième borne de sortie reliées de façon fixe par un conducteur peuvent être présentes. L'élément d'inversion comprend deux parties mobiles en rotation l'une par rapport à l'autre, l'une des parties comprenant un support isolant muni de plages conductrices, et l'autre partie comprenant des pinces de serrage adaptées pour enserrer le support et les plages. Selon la position en rotation des deux parties, la connexion entre les bornes d'entrée et de sortie par l'intermédiaire des conducteurs est inversée

Selon un mode de réalisation, la partie de l'ensemble d'inversion comprenant les pinces de serrage conductrices est reliée par des conducteurs, qui peuvent être souples ou rigides, aux bornes d'entrée et de sortie, et se raccorde sur des plages conductrices de raccordement mises en place sur des supports isolants adaptés pour être enserrés par les pinces de l'autre partie ; les plages conductrices sont elles-mêmes reliées deux à deux pour former des circuits conducteurs. Les supports sont associés à des moyens d'actionnement leur permettant de prendre une première position dans laquelle les pinces assurent le raccordement entre deux plages du support, et une deuxième position dans laquelle elles assurent le raccordement entre deux autres plages du support ; les circuits sont quant à eux agencés pour qu'entre la première et la deuxième position, il y ait inversion du raccordement entre bornes d'entrée et de sortie.

De préférence, le support de l'élément d'inversion selon l'invention comprend deux disques couplés le long de leur axe de rotation par un arbre. Les plages conductrices sont mises en place sur chaque disque : des premiers circuits relient des plages du même disque, des deuxièmes circuits relient une plage d'un disque à une plage de l'autre disque par l'intermédiaire de l'arbre. Avantageusement, les circuits conducteurs et les plages de raccordement forment un coeur conducteur, par exemple en lames de cuivre, sur lequel est surmoulée la partie isolante du support de l'élément d'inversion.

Le support peut être monobloc ou formé de deux éléments, de préférence identiques. Dans ce deuxième cas, il est avantageux que les deux éléments du support puissent bouger l'un par rapport à l'autre, notamment le long de l'axe de rotation, de façon à optimiser le centrage des pinces et à simplifier le montage en tolérant des jeux : les deuxièmes circuits conducteurs comprennent alors une première et une deuxième portion mobiles relativement pour tolérer le mouvement relatif au sein du support isolant. Dans un mode de réalisation préféré, les deuxièmes circuits conducteurs sont formés de deux portions similaires, comprises dans les deux éléments du support isolant, et reliées entre elles par un conducteur de connexion apte à se déplacer de façon guidée par rapport aux deux portions, par exemple au sein d'une rainure du support isolant.

L'ensemble d'inversion est couplé à des moyens d'actionnement dans un dispositif selon l'invention. Selon des modes de réalisation préférés, les moyens d'actionnement du support isolant sont rotatifs et unidirectionnels, la première et la deuxième position sont séparées de 90° l'une de l'autre. Les moyens d'actionnement sont avantageusement couplés à des moyens de commande du dispositif d'inversion, et/ou à des capteurs permettant d'assurer la sécurité et/ou l'optimisation de l'inversion.

Dans un autre mode de réalisation, les pinces de serrage conductrices de la première partie de l'ensemble d'inversion sont destinées à relier des plages conductrices de la deuxième partie et raccordées aux bornes d'entrée et de sortie. Les plages conductrices de raccordement sont mises en place sur des supports isolants adaptés pour être enserrés par les pinces, elles-mêmes reliées deux à deux pour former des ponts conducteurs. Les ponts sont associés à des moyens d'entraînement leur permettant de prendre une première position dans laquelle ils assurent le raccordement entre deux plages du support, et une deuxième position dans laquelle ils assurent le raccordement entre deux autres plages du support ; les plages sont quant à elles agencées pour qu'entre la première et la deuxième position, il y ait inversion du raccordement entre bornes d'entrée et de sortie.

De préférence, les moyens d'entraînement des ponts comprennent un ou deux barreaux rotatifs autour d'un axe, lesdits barreaux étant avantageusement munis de cavités logeant une portion non active des pinces et des liaisons entre deux pinces pour former lesdits ponts. Les plages conductrices sont mises en place sur un support isolant par barreau ; le support est tel que, quelle que soit la position relative en rotation du barreau, il est enserré entre les pinces des ponts de raccordement.

Dans le mode de réalisation préféré, deux barreaux comprennent chacun un pont de pinces, avantageusement diamétralement opposées, et séparés l'un de l'autre par un arbre rotatif le long de l'axe. Les deux supports sont chacun munis de trois plages conductrices : une des trois plages est adaptée pour être en contact avec une pince du pont dans la première et dans la deuxième position ; les deux autres plages conductrices du premier barreau sont reliées, avantageusement par un conducteur fixe, aux deux autres plages conductrices du deuxième barreau pour un raccordement à la même borne.

L'ensemble d'inversion est couplé à des moyens d'actionnement dans un dispositif selon l'invention. Selon des modes de réalisation préférés, les moyens d'actionnement du(des) barreau(x) sont rotatifs et unidirectionnels, la première et la deuxième position des ponts de pinces sont séparées de 90° l'une de l'autre. Les moyens d'actionnement sont avantageusement couplés à des moyens de commande du dispositif d'inversion, et/ou à des capteurs permettant d'assurer la sécurité et/ou l'optimisation de l'inversion.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1, déjà décrite, illustre un départ-moteur muni d'un inverseur de phase.
Les figures 2A et 2B représentent schématiquement un ensemble d'inversion pour un dispositif selon un mode de réalisation de l'invention.
La figure 3 montre un dispositif d'inversion selon un mode de réalisation de l'invention.
La figure 4 représente schématiquement un ensemble d'inversion pour un dispositif selon un autre mode de réalisation de l'invention.
Les figures 5A et 5B montrent un support pour un ensemble d'inversion selon un mode de réalisation.
La figure 6 illustre un dispositif d'inversion selon un mode de réalisation de l'invention.
Les figures 7A et 7B montrent un support isolant selon un mode de réalisation alternatif.
La figure 8 illustre un dispositif d'inversion selon un mode de réalisation de l'invention.
Les figures 9A et 9B montrent la première et la deuxième position d'un ensemble d'inversion pour un dispositif selon un mode de réalisation de l'invention.
La figure 10 représente un ensemble d'inversion selon un autre mode de réalisation.
La figure 11 montre un dispositif d'inversion selon un mode de réalisation de l'invention.

### DESCRIPTION DETAILLEE D'UN MODE DE REALISATION PREFERE

Dans un dispositif inverseur 100, 200 selon l'invention, les contacts entre les conducteurs Lᵢ, Tⱼ de phase sont réalisés par l'intermédiaire de pinces 105, 205 ce qui permet, sans ajouter de pièces supplémentaires, d'assurer une pression de contact lors du passage du courant.

Les pinces 105, 205 schématisées en figure 2A par exemple, peuvent être de conception classique, tel que par exemple utilisées dans FR 2 668 851 : le choix de cette solution permet ainsi de diminuer les coûts logistiques. Qui plus est, peu sensibles aux chocs et vibrations, les pinces 105 de longueur *L* et d'écartement *d* voient leur effort de contact augmenter en cas de courant de court-circuit I_{cc} selon la formule F = (I_{cc}²/4)×(µ₀·L·π·d). Ceci permet de se dispenser de tout ressort ou autre destiné à éviter la réouverture des contacts lors de répulsion due au passage de courant de court-circuit ; en particulier, le coût des bobine ou autre circuit magnétique disparaît.

Selon l'invention, les pinces 105, 205 assurant le contact ne sont pas sollicitées en ouverture/fermeture lors des changements de phase, ce qui permet d'optimiser leur durée de vie, de diminuer l'usure des composants en contact, et de maîtriser la pression de contact à un niveau suffisant au passage du courant nominal. Le principe d'inversion selon l'invention repose sur un glissement entre les pinces 105 d'une alternance de secteurs conducteurs et isolants d'une même pièce ; cette solution offre pour autre avantage une réduction de coût générée par le fait que les pinces et les secteurs conducteurs sont dépourvus de pastilles d'argent.

En particulier, dans un premier mode de réalisation les pinces de contact 105 sont raccordées aux bornes 106, 108 de l'inverseur 100, c'est-à-dire aux phases L1, L2, T1, T2 à inverser et forment un élément fixe; l'élément d'inversion 110 comprend en outre un deuxième élément mobile 115 isolant avec des circuits conducteurs 120 reliant chacun deux plages de raccordement 125, tel que les plages de raccordement 125 peuvent se mettre en place entre les pinces 105. Selon la position relative des circuits conducteurs 120, c'est-à-dire des plages de raccordement 125, les pinces 105 relient entre elles des bornes 106, 108 différentes.

En particulier, tel qu'illustré schématiquement en figure 2B, l'élément mobile 115 comprend un disque isolant rotatif, par exemple en plastique et/ou polytétrafluoroéthylène, muni de plages conductrices 125 séparées l'une de l'autre d'une distance d'isolement suffisante et formant un routage électrique 120 entre des parties 125 du disque 115 enserrées par les pinces 105 ; avantageusement, les pinces 105 en bronze et le routage conducteur 120 est en cuivre, par exemple déposé dans une gravure du disque isolant 115, et de préférence tel que la surface de l'élément mobile 115 soit sensiblement plane. De préférence, la rotation d'un quart de tour du disque 115 entraîne l'inversion de phases, et le disque 115 comprend trois secteurs isolants séparant deux circuits conducteurs 120₁, 120₂ symétriques par rapport à deux diamètres orthogonaux ; les pinces 105 raccordées aux bornes d'entrée 106, respectivement de sortie 108, sont diamétralement opposées.

Dans une première position du disque 115 illustrée en traits pleins, le premier circuit 120₁ relie les pinces 105 raccordées aux premières phases d'entrée L1 et de sortie T1, et le deuxième circuit 120₂ relie les pinces 105 raccordées aux deuxièmes phases d'entrée L2 et de sortie T2 ; dans une deuxième position du disque 115 illustrée en pointillés, le premier circuit 120₁ relie la pince 105 raccordée à la première phase d'entrée L1 à la pince 105 raccordée à la deuxième phase de sortie T2, et le deuxième circuit 120₂ relie la pince 105 raccordée à la deuxième phase d'entrée L2 à la pince 105 raccordée à la première phase de sortie T1. Ainsi, entre la première et la deuxième position, il y a eu inversion de la connexion entre les phases ; pour revenir à la première position, il est possible d'actionner le disque 115 dans le sens inverse ou de poursuivre la rotation dans le même sens d'un quart de tour du moteur.

La rotation du disque 115 peut être réalisée par tout moyen 130 de type moteur ou électroaimant ; le moyen d'actionnement 130 peut être bistable, ou il peut être monostable, éventuellement combiné avec un système de type roue à hochet et crémaillère. En outre, il est possible de réduire au maximum le coefficient de frottement pince 105/disque 115, par exemple par un revêtement adapté, et la pression exercée par les pinces 105 est très faiblement dépendante de la capacité de tenue au court-circuit, ce qui permet d'utiliser un actionneur à faible effort.

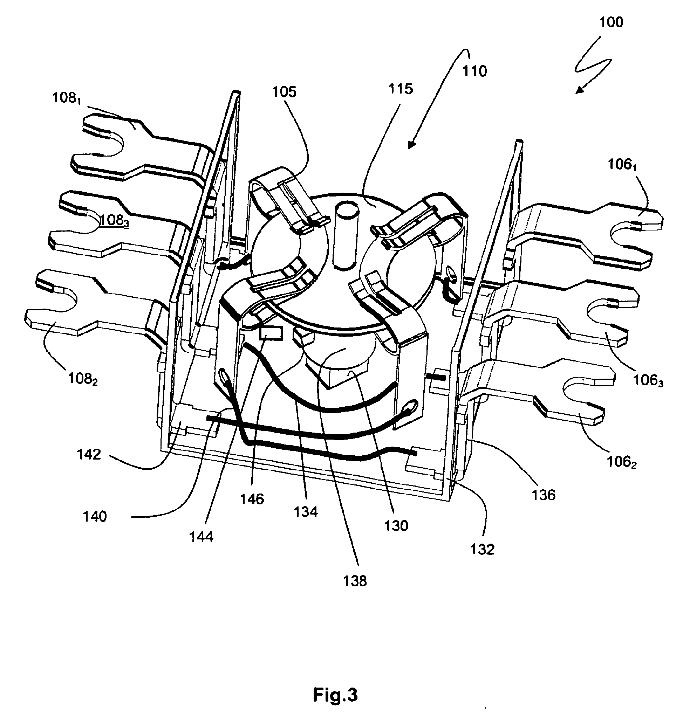

Tel qu'illustré en figure 3, l'ensemble d'inversion 110 est logé dans un boîtier 132 qui est de préférence de forme et taille similaires à celles des appareils de protection 10 de la ligne 1 et de même système de montage, notamment un rail DIN. Le boîtier 132 comprend, de façon classique, trois bornes d'entrée 106 et trois bornes de sortie 108 ; une borne d'entrée 106₃ et une borne de sortie 108₃ sont reliées entre elles par un conducteur fixe 134, par exemple une tresse ou une lamelle de cuivre ; les autres bornes 106₁, 106₂, 108₁, 108₂ sont prolongées par des conducteurs 136 vers une extrémité de raccordement à laquelle est connectée une pince 105 de l'ensemble d'inversion 110. Le support 115 de l'ensemble d'inversion 110 est placé entre les pinces 105, associé à un arbre 138 couplé à un moteur des moyens d'actionnement 130 ; les moyens d'actionnement 130 sont montés stables, ou fixes, par rapport au boîtier 132 par des moyens adaptés, et l'arbre 138 peut être mis en place dans des moyens de guidage.

Avantageusement, les pinces 105 sont montées flottantes suivant l'axe AA du disque 115, de sorte que les efforts des pinces 105 sur le disque 115 sont équilibrés, et une partie 140 des conducteurs 136 de raccordement au moins comprend une tresse flexible de façon à ne pas perturber l'auto-centrage des pinces 105, et à ne pas transmettre les efforts de serrage sur les bornes d'entrée/sortie 106, 108 aux pinces 105 et au disque 115. De préférence, par souci de compacité, une partie 142 des conducteurs de raccordement 136 au moins est décalée du plan formé par les pinces 105 (c'est-à-dire du plan dans lequel évolue le disque 115). Les contacts auxiliaires 144, interdisant notamment l'inversion en charge, peuvent par exemple être remplacés par des capteurs directement manoeuvrés par des protubérances 146 positionnées sur le disque 115 ou son arbre 138. Cette configuration réduit le nombre de pièces en mouvement et le coût du dispositif.

Le diamètre du disque 115 dépend par ailleurs de la gamme de l'inverseur 100 et des distances d'isolement normalisées nécessaires entre les circuits conducteurs 120. En particulier lorsque la gamme de l'inverseur 100 devient élevée, la gestion des distances d'isolement peut devenir complexe dans un support 115 sous forme de disque isolant. Il peut être souhaitable que le support mobile de l'ensemble d'inversion comprenne plusieurs composants séparés, reliés entre eux le long de l'axe de rotation AA, formant ainsi un distributeur 150 dans lequel les circuits conducteurs sont partagés.

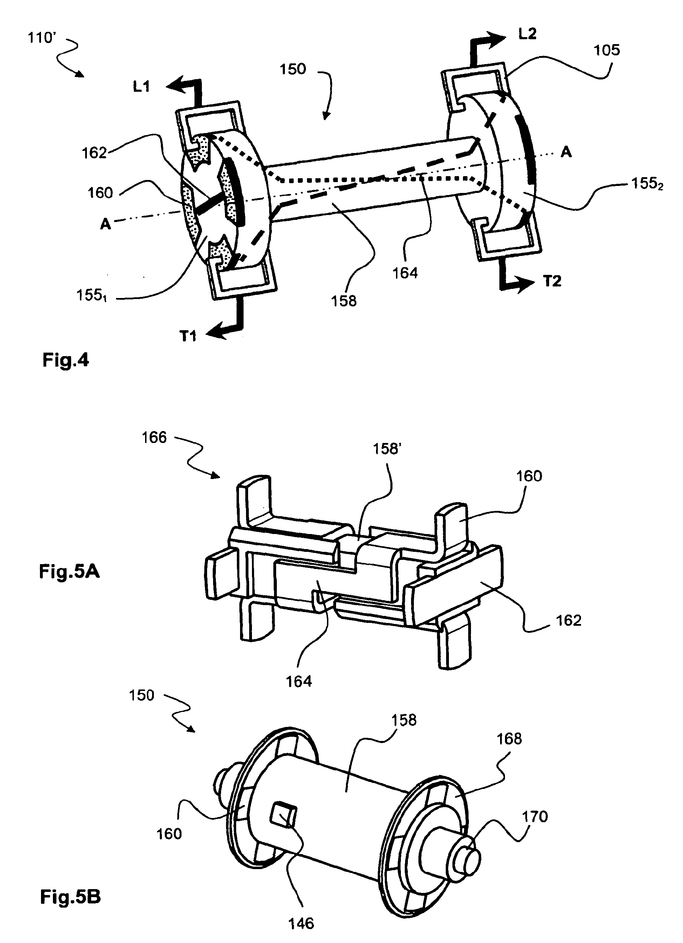

Dans le mode de réalisation schématisé en figure 4, le distributeur 150 est formé de deux disques 155 isolants, par exemple en plastique, éventuellement recouverts de polytétrafluoroéthylène, et un arbre 158, lui aussi en plastique ; chacun des disques 155ᵢ est associé à une paire de pinces 105, de préférence en bronze, diamétralement opposées et raccordées à une phase d'entrée L et une phase de sortie T. Pour, ici encore, effectuer l'inversion de phase par rotation d'un quart de tour, chacun des disques 155 comprend quatre plages de raccordement 160 à 90° l'une de l'autre; deux premiers circuits conducteurs 162 relient entre elles deux plages 160, avantageusement selon un diamètre, d'un même disque 155ᵢ et deux deuxièmes circuits conducteurs 164 relient une plage conductrice 160 du premier disque 155₁ à une plage conductrice du deuxième disque 155₂.

Ainsi, par analogie avec la figure 2, dans une première position non illustrée du disque, les pinces 105 de chaque disque 155ᵢ sont raccordées sur les premiers circuits 162, de sorte que les premières, respectivement deuxièmes, phases d'entrée et de sortie L1, T1, respectivement L2, T2, sont raccordées entre elles. Dans une deuxième position illustrée en figure 4 et décalée d'un quart de tour de l'arbre 158, les pinces 105 de chaque disque 155ᵢ sont raccordées sur les plages des deuxièmes circuits 164, de sorte qu'il y a eu inversion de la connexion entre les phases ; pour revenir à la première position, il est possible d'actionner le disque dans le sens inverse ou de poursuivre la rotation dans le même sens d'un quart de tour du moteur.

Ici encore, la rotation du distributeur 150 peut être réalisée par tout moyen 130 de type moteur ou électroaimant, bistable ou monostable, et à faible effort, la pression exercée par les pinces 105 étant très faiblement dépendante de la capacité de tenue au court-circuit. En outre, l'inversion à 90° est un mode préféré mais non indispensable, et il est possible d'avoir plus de circuits conducteurs 162, 164 que les quatre présentés.

La réalisation du distributeur 150 d'un ensemble d'inversion 110' peut prendre différentes variantes ; en particulier, si les premiers circuits conducteurs 162 peuvent être surfaciques, il est préférable pour l'isolement général de l'ensemble d'inversion 110' que les deuxièmes circuits conducteurs 164 au moins soient intégrés dans l'isolant du distributeur 150, notamment au niveau de son arbre 158. Dans un mode de réalisation préféré illustré en figure 5A, les circuits conducteurs 162, 164 sont dans un premier temps réalisés, par croisement sur une âme 158' de barres en cuivre respectant les distances d'isolement ; pour optimiser les coûts, il est préférable que les premiers, respectivement deuxièmes, circuits 162, 164 soient identiques. Une fois le coeur conducteur 166 réalisé, il est surmoulé par un plastique adapté (figure 5B) ; le surmoulage 168 comprend les éléments requis pour la mise en place et l'actionnement du distributeur, et notamment les pignons d'engrenage 170, ou autres éléments 146 destinés à coopérer avec des capteurs ou contacts auxiliaires 144.

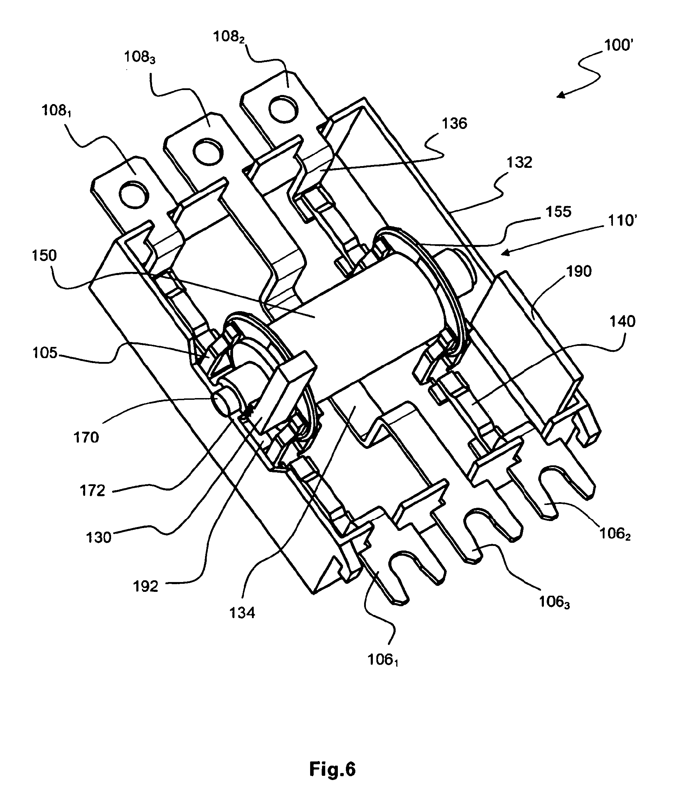

Dans ce mode de réalisation, il est avantageux que les conducteurs 136 reliant les bornes 106, 108 aux pinces de serrage 105 soient partiellement souples, de façon à permettre un auto-centrage des pinces 105. Ainsi, tel qu'illustré en figure 6, un élément d'inversion 110' est logé dans un boîtier 132 similaire au précédent, avec trois bornes d'entrée 106 et trois bornes de sortie 108, deux des bornes 106₃, 108₃ étant reliées entre elles par un conducteur fixe 134 et les autres bornes 106₁, 106₂, 108₁, 108₂ étant prolongées par des conducteurs 136 dont une partie 140 est flexible jusqu'à une pince de raccordement 105. Le distributeur 150 est monté transversalement au boîtier 132, de sorte que les pinces de raccordement 105 viennent se mettre en place, en formant une connexion flottante, sur les disques d'extrémité 155 ; de préférence, des aménagements 172, par exemple des rainures, du boîtier 132 permettent un agencement stable de l'ensemble d'inversion 110'. La même configuration que précédemment en relation avec la figure 3 peut être adoptée pour les contacts auxiliaires (non illustrés).

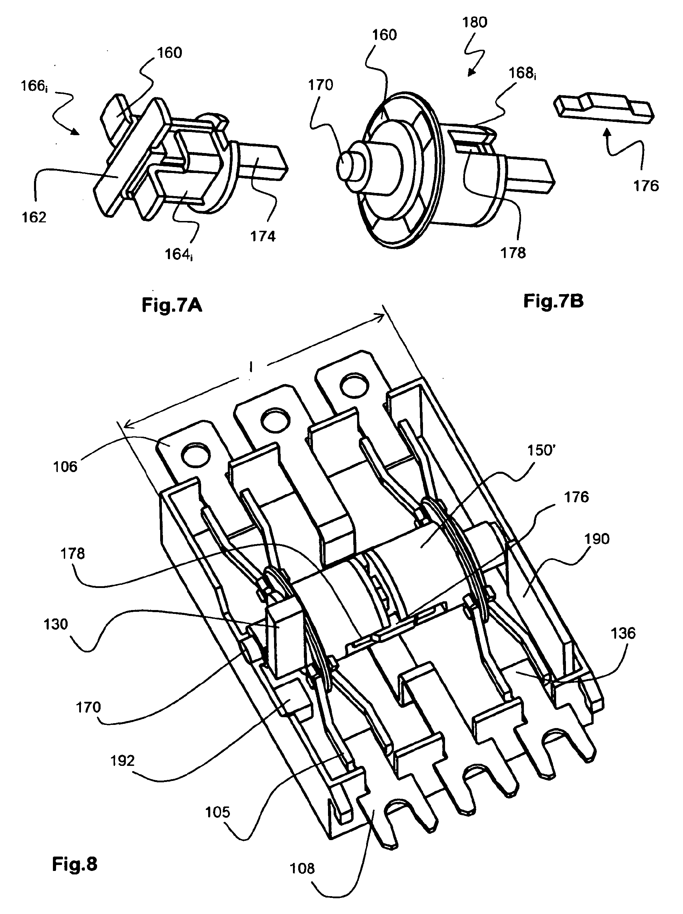

Alternativement, il est possible que le distributeur 150' soit partiellement souple, les conducteurs 136 pouvant alors être rigides. En particulier, l'isolant 168 du distributeur forme deux parties mobiles 168ᵢ l'une par rapport à l'autre ; de préférence, le mouvement relatif entre les deux parties est guidé, par exemple par un axe 174 placé dans une cavité centrale du distributeur 150'. Les deuxièmes circuits 164 sont adaptés pour permettre le mouvement relatif des deux parties isolantes 168ᵢ; de préférence, le coeur conducteur, illustré en figure 7A, est lui aussi formé de deux parties symétriques 166ᵢ, les deuxièmes circuits 164 étant coupés en deux portions d'extrémité 164ᵢ, et les deux parties 166ᵢ sont surmoulées (figure 7B). Pour assurer la conduction des deuxièmes circuits 164 entre leurs deux portions 164ᵢ, des moyens souples peuvent être mis en place ; avantageusement, un conducteur de connexion 176 rigide est couplé de façon mobile avec la première et la deuxième portion de chaque deuxième circuit 164, logé dans un aménagement adapté du surmoulage 168, par exemple une épargne ou rainure en queue d'aronde, 178. Ainsi, le distributeur 150' est formé de deux parties 180 identiques reliées entre elles par deux conducteurs de connexion 176.

Tel qu'illustré en figure 8, l'ensemble d'inversion comprenant ce distributeur 150' est monté de façon similaire à l'ensemble précédent 110', avec formation préalable du distributeur 150'. Le mouvement relatif étant possible au sein du distributeur 150', les conducteurs 136 de raccordement aux bornes 106, 108 peuvent être rigides, voire réduits à une taille minimale, de sorte que la longueur de raccordement est faible ou les pinces 105 ont une longueur et un écartement plus importants.

La conception du contact selon l'invention, par pinces serrantes 105, permet de se dispenser de tout ressort, ou autre, destiné à éviter la réouverture des contacts lors de répulsion due au passage de courant de court-circuit ; en particulier, le coût des bobine ou autre circuit magnétique disparaît. Par ailleurs, le moyen d'actionnement 130 de l'inverseur 100, 100' peut être de taille réduite, et il est possible de placer les contacts auxiliaires 144 au plus près des pinces de contact 105 : il est ainsi possible d'intégrer l'ensemble d'inversion 110 selon l'invention dans un boîtier 132 de largeur 1 = 45 mm pour des applications jusqu'à 50 kA de court-circuit.

Le boîtier 132 des dispositifs inverseurs 100, 100' selon l'invention comprend avantageusement un système de commande électronique 190 permettant d'activer les moyens d'actionnement 130 de l'arbre de façon contrôlée. La simplicité du mouvement impliquant l'inversion de phase permet une gestion optimale du temps d'inversion, de sorte que l'alimentation des moyens d'actionnement 130 et leur consommation peuvent être rationnalisées. Il est possible en outre de doter l'inverseur 100 de capteurs permettant l'obtention d'informations supplémentaires au niveau de l'arbre 158 à moindre coût. Par exemple, un capteur 192 peut totaliser le nombre d'inversions, ce qui permet de connaître l'usure de l'ensemble d'inversion 110, 110' pour assurer une maintenance préventive et limiter les temps d'arrêt ; le sens de rotation et/ou la position angulaire relative de l'arbre 138, 158 peuvent être contrôlés, ce qui permet de vérifier que la commande n'est pas erronée et/ou redondante avec la dernière manoeuvre de l'ensemble d'inversion 110, 110'.

Le dispositif 100, 100' selon l'invention permet ainsi de réaliser une fonction d'inversion de deux phases par un nombre limité de composants, associé à un nombre restreint de pièces en mouvement relatif, diminuant le coût de montage du dispositif. Qui plus est, la conception permet l'utilisation de pièces de formes simples, qui peuvent être utilisées plusieurs fois, ce qui réduit encore les coûts de réalisation. En particulier, la conception par un disque unique 115 tout comme l'intégration du circuit d'inversion des phases dans l'arbre rotatif 158 permettent de réduire fortement le nombre de conducteurs 120, 162, 164 sous tension, qui facilite la tenue des lignes de fuites et distances dans l'air qui sont ajustées au mieux par le surmoulage, les distances d'isolement pouvant être gérées directement par les formes choisies.

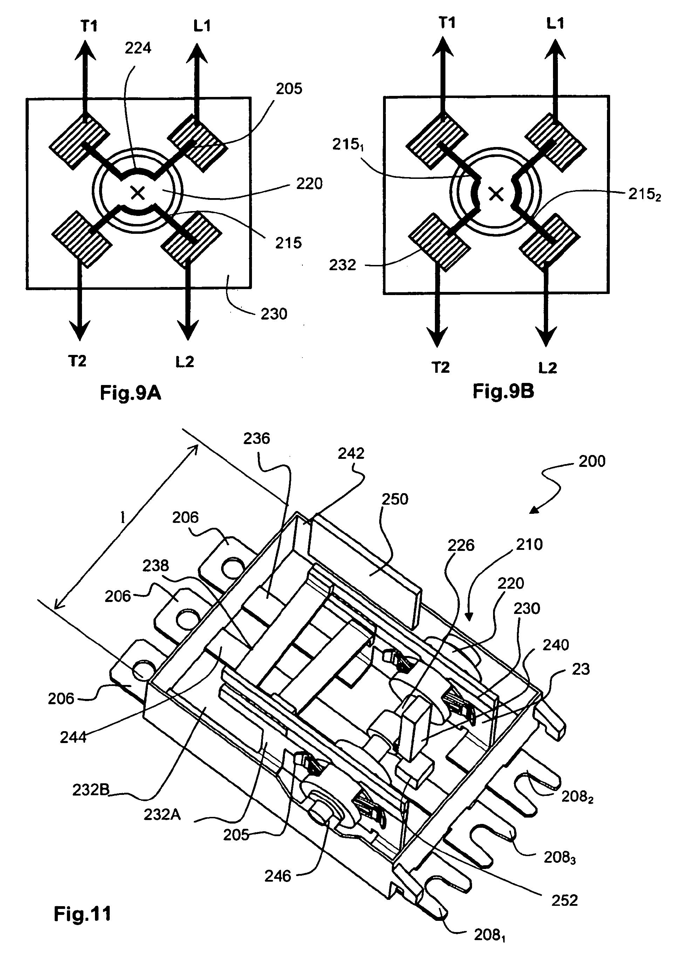

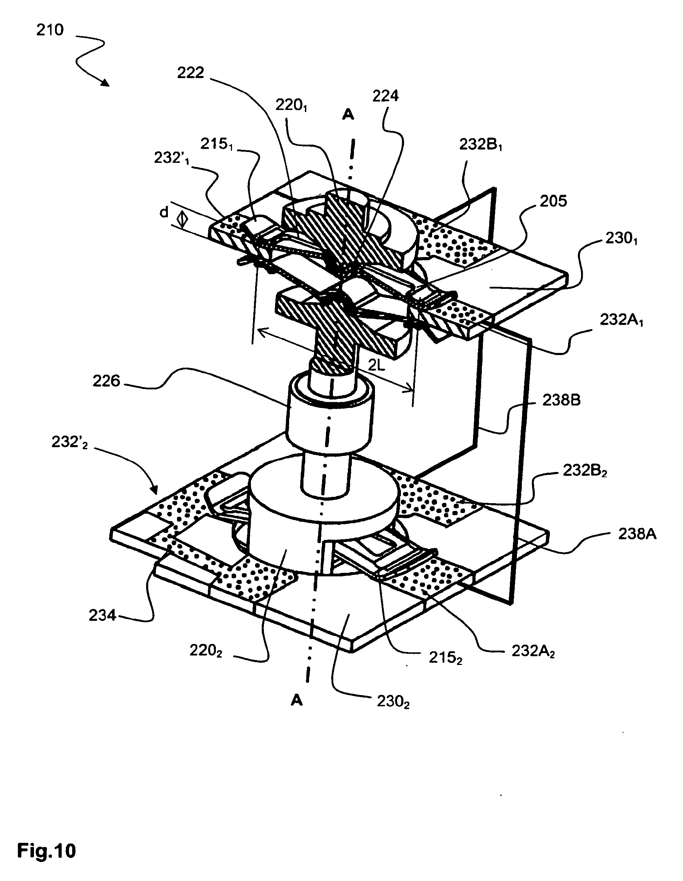

Alternativement, dans un autre mode de réalisation, les bornes 206, 208 de l'inverseur 200, c'est-à-dire les phases à inverser, sont couplés à un circuit conducteur fixe de l'élément d'inversion 210 selon l'invention, qui comprend en outre les pinces de contact 205, mises en place sur un élément mobile permettant, selon sa position, de raccorder entre elles des plages conductrices différentes du circuit. Ainsi, tel qu'illustré schématiquement en figures 9 et 10, la première partie de l'ensemble d'inversion peut tourner autour d'un axe AA et les pinces 205 sont associées par paires pour former des ponts de contact 215 ; selon la position autour de l'axe AA, les ponts 215₁, 215₂ couplent deux phases ou deux autres phases.

Les moyens permettant d'entraîner les pinces 205 en rotation comprennent au moins un barreau isolant 220 rotatif autour de l'axe AA ; avantageusement, les pinces 205 sont logées dans des cavités adaptées 222 du barreau 220, et les ponts 215 sont formés par un conducteur de connexion 224 entre deux pinces 205 ; le conducteur 224 peut être intégré au barreau 220 ou surfacique ; le conducteur de liaison 224 peut être unitaire avec les pinces 205 (voir figure 10). Suivant l'encombrement souhaité, la puissance de l'inverseur 200 et les distances d'isolement à respecter, les pinces 205 peuvent faire partie d'un (figure 2) ou de deux (figure 10) barreaux 220. Dans le cas où deux barreaux 220₁, 220₂ sont choisis, il est avantageux de les séparer le long de l'axe AA par un arbre 226, de façon à accroître les distances d'isolement.

L'ensemble d'inversion 210 selon l'invention est complété par une deuxième partie formée par un support 230 par barreau 220 de pinces 205, ledit support 230 étant traversé par le barreau 220, enserré par les pinces 205 et adapté pour permettre leur rotation. Les supports 230 sont isolants et munis de plages conductrices 232 qui sont raccordées aux phases à inverser ; les plages conductrices 232 sont séparées l'une de l'autre d'une distance d'isolement suffisante, mais restent suffisamment proches de l'axe AA pour que les pinces 205 des ponts 215 puissent les enserrer deux à deux. Avantageusement, l'isolant 230 est du polytétrafluoroéthylène afin de diminuer le frottement, les plages 232 sont en cuivre, et le support 230 présente une surface sensiblement plane malgré sa double composition afin de réduire l'usure des pinces 205 et/ou plages 232.

Il est avantageux que la rotation d'un quart de tour du barreau 220 entraîne l'inversion de phase. En présence d'un seul barreau 220 (figures 9), les pinces 205 forment alors des ponts 215₁, 215₂ couvrant un quart de cercle du barreau 220, et le support 230 peut ainsi être muni de quatre plages conductrices 232 à 90° l'une de l'autre, sensiblement au niveau de l'extrémité de serrage des pinces 205, et alternativement couplées par des conducteurs aux bornes d'entrée et sortie. Ainsi, tel qu'illustré dans la figure 9A, dans une première position du barreau 220, le premier pont de pinces 215₁ relie les plages conductrices correspondant aux phases L1 d'alimentation et T1 du moteur 2, et le deuxième pont 215₂ relie les plages conductrices correspondant aux phases L2 d'alimentation et T2 du moteur 2. Dans la deuxième position illustrée en figure 2B, le premier pont 215₁ relie la phase L1 d'alimentation à la phase T2 du moteur 2, et le deuxième pont 215₂ relie la phase L2 d'alimentation à la phase T1 du moteur 2. Ainsi, entre la première et la deuxième position, il y a eu inversion de la connexion entre les phases ; pour revenir à la première position, il est possible d'actionner le barreau 220 dans le sens inverse ou de poursuivre la rotation dans le même sens d'un quart de tour.

Dans le mode de réalisation préféré illustré en figure 10 et dans lequel deux barreaux coaxiaux 220₁, 220₂ sont chacun munis de deux pinces 205, celles-ci sont avantageusement sensiblement diamétralement opposées, et les deux supports 230₁, 230₂, eux aussi munis de quatre zones conductrices à 90° l'une de l'autre, comprennent en outre une zone de raccordement 234 reliant entre elles deux zones conductrices adjacentes, de façon à former une partie conductrice 232' qui est enserrée par une pince 205 quelle que soit la position relative du pont de contact 220, et à conserver deux plages conductrices 232A, 232B, isolées l'une de l'autre, qui sont enserrées par une pince 205 dans une seule des deux positions. Les plages conductrices 232A, 232B de chaque support 230 sont reliées, par un premier conducteur 236, aux bornes d'entrée 206 (respectivement de sortie) de l'inverseur 200, et chaque borne de sortie 208ᵢ (respectivement d'entrée) de l'inverseur 200 est raccordée par un deuxième conducteur, de préférence de même type, à la partie conductrice 232' d'un support 230. Les bornes d'entrée 206ᵢ (respectivement de sortie) sont ainsi reliées à deux plages conductrices 232Aᵢ, 232Bᵢ de deux supports 230₁, 230₂ différents : un élément de type tige conductrice 238A, 238B peut effectuer ce raccordement au niveau des supports 230ᵢ, mais d'autres moyens sont possibles.

Par analogie avec les figures 9, dans la première position illustrée, le premier pont de pinces 215₁ relie la première partie conductrice 232'₁ raccordée à la phase d'alimentation L1 et la première plage conductrice 232A₁ correspondant à la phase T1 du moteur 2 ; le deuxième pont 215₂ relie la deuxième partie conductrice 232'₂ correspondant à la phase L2 et la deuxième plage conductrice 232' correspondant à la phase T2 du moteur 2. Dans la deuxième position (non illustrée), le premier pont 215₁ relie la première partie conductrice 232'₁ correspondant à la phase L1 et la deuxième plage conductrice 232B₁ correspondant à la phase T2 du moteur 2 ; le deuxième pont 215₂ relie la deuxième partie conductrice 232'₂ correspondant à la phase L2 et la plage conductrice 232B₂ correspondant à la phase T1 du moteur 2. Ici encore, il se produit une inversion de la connexion entre les phases entre la première et la deuxième position ; le retour de la deuxième à la première position peut également s'effectuer par rotation en sens inverse ou poursuite de la rotation dans le même sens.

Il est à noter que les configurations illustrées peuvent être modifiées. Notamment, contrairement au schéma de la figure 10, les deux ponts de pinces 215 peuvent être orthogonaux, en particulier selon les facilités de montage des conducteurs 236, 238 ; de même, les pinces 205 peuvent ne pas être diamétralement opposées. Plus généralement, une rotation de 120° ou autre peut être envisagée pour passer de la première à la deuxième position, le nombre de plages conductrices étant adapté en conséquence.

La rotation autour de l'axe AA peut être réalisée par tout moyen de type moteur ou électroaimant ; le moyen d'actionnement 240 peut être bistable, ou il peut être monostable et éventuellement combiné avec un système de type roue à hochet et crémaillère. En outre, la pression exercée par les pinces 205 est très faiblement dépendante de la capacité de tenue au court-circuit, ce qui permet d'utiliser un actionneur 240 à faible effort. En particulier, dans un mode de réalisation préféré illustré en figure 11, l'entraînement est réalisé par un électroaimant bistable couplé à une crémaillère.

Tel qu'illustré en figure 11, l'ensemble d'inversion 210 est logé dans un boîtier 242, qui est de préférence de forme et taille similaires à celles des appareils de protection 10 de la ligne 1 et de même système de montage, notamment un rail DIN. Le boîtier 242 comprend, de façon classique, trois bornes d'entrée 206 et trois bornes de sortie 208 ; une borne d'entrée 206₃ et une borne de sortie 208₃ sont reliées entre elles par un conducteur fixe 244, par exemple une tresse ou une lamelle de cuivre ; les autres bornes 206₁, 206₂, 208_{1,} 208₂ sont reliées aux plages conductrices 232 de l'ensemble d'inversion 210. Les conducteurs 236 reliant les bornes 206, 208 de l'inverseur 200 sont montés fixes par rapport au boîtier 242, et l'arbre 226 est mis en place au niveau d'un système de guidage 246 permettant une stabilité de l'ensemble d'inversion 210. De préférence, les supports 230 de l'ensemble d'inversion 210 sont proches de chaque paroi latérale du boîtier 242 pour augmenter les distances d'isolement et libérer le maximum de place au centre du boîtier 242.

La conception du contact selon l'invention, par pinces serrantes 205, permet de se dispenser de tout ressort, ou autre, destiné à éviter la réouverture des contacts lors de répulsion due au passage de courant de court-circuit ; en particulier, le coût des bobine ou autre circuit magnétique disparaît. Par ailleurs, le moyen d'actionnement 240 de l'inverseur 200 peut être de taille réduite, et localisé dans l'espace résiduel entre les deux barreaux 220 : il est ainsi possible d'intégrer l'ensemble d'inversion 210 selon l'invention dans un boîtier 242 de largeur 1 = 45 mm pour des applications jusqu'à 50 kA.

Le boîtier 242 de l'inverseur 200 selon l'invention comprend avantageusement un système de commande électronique 250 permettant d'activer les moyens d'actionnement 240 des barreaux 220 de façon contrôlée. La simplicité du mouvement impliquant l'inversion de phase permet une gestion optimale du temps d'inversion, de sorte que l'alimentation des moyens d'actionnement 240 et leur consommation peuvent être rationnalisées. Il est possible en outre d'intégrer des capteurs 252 permettant de refléter la situation de l'inverseur 200 (position des pinces 205, état de charge sur les lignes 236, 244) et d'agir sur les moyens d'actionnement et/ou de commande, notamment en empêchant les inversions en charge à la manière des contacts auxiliaires. Par exemple, un capteur de position 252 directement manoeuvré par des cames présentes sur l'arbre rotatif 226 peut donner la position relative des pinces 205 par la détermination de la rotation.

Le dispositif 200 selon l'invention permet ainsi de réaliser une fonction d'inversion de deux phases par un nombre limité de composants, associé à un nombre restreint de pièces en mouvement relatif, diminuant le coût de montage du dispositif. Qui plus est, la conception permet l'utilisation de pièces de formes simples, qui peuvent être utilisées plusieurs fois, ce qui réduit encore les coûts de réalisation

Bien que l'invention ait été décrite en référence à un dispositif pour inverser deux phases au démarrage d'un moteur triphasé, elle ne s'y limite pas : d'autres éléments peuvent être concernés par l'invention. En particulier, le dispositif selon l'invention est adapté pour les inversions du sens de marche des moteurs asynchrones triphasés. Le dispositif selon l'invention peut également être adapté, par exemple par addition d'un troisième jeu de pinces et d'un troisième barreau, d'une troisième piste ou d'un troisième distributeur, d'un troisième pont de pinces et d'un troisième barreau, pour les passages de la configuration « étoile » à la configuration « triangle » de démarrage des moteurs triphasés ; inversement, la conception du dispositif selon l'invention est adaptée pour une inversion du courant continu, en supprimant la troisième phase.

## Revendications

1. Dispositif d'inversion de phase (100, 100', 200) comprenant :
- une première et une deuxième borne d'entrée (106ᵢ, 206ᵢ) ;
- une première et une deuxième borne de sortie (108ᵢ, 208ᵢ) ;
- un élément d'inversion (110, 110', 210) comprenant :
o une première partie comprenant des éléments conducteurs (105, 205),
o une deuxième partie comprenant au moins un support isolant (115, 150, 230) doté de plages conductrices (125, 160, 232),
o des moyens d'entraînement de l'une des deux parties en rotation relative autour d'un axe (AA) par rapport à l'autre ;
- des conducteurs (136, 236) dont une première extrémité au moins est couplée à une borne (106ᵢ, 206ᵢ, 108ᵢ, 208ᵢ) et la deuxième extrémité est reliée à l'une des parties de l'élément d'inversion (110, 110', 210) ;
- des moyens d'actionnement des moyens d'entraînement de l'élément d'inversion (110, 110', 210) de sorte que les deux parties puissent prendre une première position dans laquelle les premières bornes (106₁, 108₁, 206₁, 208₁) et les deuxièmes bornes (106₂, 108₂, 206₂, 208₂) sont reliées entre elles par l'intermédiaire des conducteurs (136, 236), et une deuxième position dans laquelle la première borne d'entrée (106₁, 206₁), respectivement de sortie (108₁, 208₁), est reliée à la deuxième borne de sortie (108₂, 208₂), respectivement d'entrée (106₂, 206₂), par l'intermédiaire des conducteurs (136, 236),
**caractérisé en ce que** les éléments conducteurs sont des pinces de serrage conductrices (105, 205), le support et les plages (105, 115, 150, 205, 230, 125, 160, 232) de la deuxième partie sont adaptés pour être serrés entre les pinces (105, 205) de la première partie quelle que soit la position relative en rotation de la première et la deuxième partie.

2. Dispositif selon la revendication 1 dans lequel la première et la deuxième position sont séparées par 90°.

3. Dispositif selon la revendication 2 dans lequel les moyens d'actionnement (130, 230) comprennent un moteur rotatif unidirectionnel.

4. Dispositif d'inversion de phase (100, 100') selon l'une des revendications 1 à 3 dans lequel :
- la première partie comprend des circuits conducteurs (120, 162, 164) isolés l'un par rapport à l'autre et reliant les plages (125, 160) des supports (105) de la deuxième partie deux à deux ;
- la deuxième extrémité des conducteurs (136) est couplée à une pince de serrage conductrice (105) de la première partie ;
de sorte que dans la première position, les circuits conducteurs (120, 162, 164) relient les premières bornes (106₁, 108₁) et les deuxièmes bornes (106₂, 108₂) entre elles par l'intermédiaire des plages conductrices (125, 160) et des pinces (105), et dans la deuxième position, les circuits conducteurs (120, 162, 164) relient la première borne d'entrée (106₁), respectivement de sortie (108₁), à la deuxième borne de sortie (108₂), respectivement d'entrée (108₂), par l'intermédiaire des plages conductrices (125, 160) et des pinces (105).

5. Dispositif selon la revendication 4 dans lequel le support isolant (150) comprend deux disques (155) et un arbre (158) les reliant.

6. Dispositif selon la revendication 5 dans lequel deux deuxièmes circuits conducteurs (164) sont partiellement localisés dans l'arbre (158) et relient une plage de raccordement (160) d'un premier disque (155₁) à une plage de raccordement (160) du deuxième disque (155₂).

7. Dispositif selon l'une des revendications 4 à 6 dans lequel le support isolant (150') comprend deux parties (180) mobiles relativement l'une à l'autre de sorte que les disques (155) peuvent avoir un jeu de positionnement l'un par rapport à l'autre.

8. Dispositif selon la revendication 7 dans lequel des deuxièmes circuits conducteurs (164) sont partiellement localisés dans l'arbre (158) et comprennent deux portions (164ᵢ) mobiles l'une par rapport à l'autre, et dans lequel les deuxièmes circuits conducteurs (164) comprennent deux portions d'extrémité (164ᵢ) et un conducteur de connexion (176) apte à se déplacer de façon guidée pour permettre le mouvement des portions d'extrémité (164ᵢ) en conservant la conduction entre elles, et l'arbre (158) comprend des moyens (178) pour guider le conducteur de connexion (176).

9. Dispositif selon l'une des revendications 4 à 8 dans lequel le support isolant (150) est surmoulé (166) partiellement sur les circuits conducteurs (162, 164).

10. Dispositif selon l'une des revendications 1 à 9 dans lequel les conducteurs (136) reliant les bornes (106, 108) aux pinces (105) sont au moins partiellement flexibles.

11. Dispositif d'inversion de phase (100, 100') selon l'une des revendications 1 à 3 dans lequel :
- la première partie comprend deux ponts (215) de deux pinces de serrage conductrices (205) ;
- les conducteurs (236) raccordent les bornes (206ᵢ, 208ᵢ) aux plages conductrices (232) de la deuxième partie ;
de sorte que, dans la première position, le premier, respectivement deuxième, pont (215₁) raccorde une première et une deuxième plage conductrice (232', 232A) et dans la deuxième position, le premier, respectivement deuxième, pont (215₁) raccorde une première et une troisième plage conductrice (232', 232B), ladite troisième plage (232B) étant différente de la deuxième plage (232A).

12. Dispositif selon la revendication 11 dans lequel l'élément d'inversion (210) comprend deux barreaux (220₁, 220₂) coaxiaux, chaque barreau (220ᵢ) supportant une paire de pinces (215ᵢ) et deux supports (230ᵢ) dotés chacun de trois plages conductrices (232Aᵢ, 232Bᵢ, 232'ᵢ), et dans lequel deux plages conductrices (232A₁, 232B₁) du premier support (230₁) sont raccordées par un conducteur fixe (238A, 238B) à deux plages conductrices (232A₂, 232B₂) du deuxième support (230₂).

13. Dispositif selon la revendication 12 dans lequel les pinces (205) de chaque pont (215) sont diamétralement opposées et logées dans des cavités (222) de chaque barreau (220).

14. Dispositif selon l'une des revendications 12 à 13 dans lequel les deux barreaux (220ᵢ) sont reliés par un arbre (226) et les moyens d'actionnement (240) sont couplés à l'arbre (226) entre les deux barreaux (220ᵢ).

15. Dispositif selon l'une des revendications 1 à 14 comprenant en outre une troisième borne d'entrée (106₃, 206₃) et une troisième borne de sortie (108₃, 208₃) reliées entre elles par un conducteur (134, 244).

## Claims

1. A phase inversion device (100, 100', 200) comprising:
- a first and second input terminal (106ᵢ, 206);
- a first and second output terminal (108ᵢ, 208);
- an inversion element (110, 110', 210) comprising:
o a first part comprising conducting elements (105, 205);
o a second part comprising at least one insulating support (115, 150, 230) provided with conducting strips (215, 160, 232);
o means for driving one of the two parts in relative rotation around an axis (AA) with respect to the other part;
- conductors (136, 236) at least a first end of which is coupled to a terminal (106ᵢ, 206ᵢ, 108ᵢ, 208ᵢ) and the second end of which is connected to one of the parts of the inversion element (110, 110', 210);
- actuating means of the drive means of the inversion element (110, 110', 210) so that the two parts can take a first position in which the first terminals (106₁, 206₁, 108₁, 208₁) and the second terminals (106₂, 206₂, 108₂, 208₂) are connected to one another by means of the conductors (136, 236), and a second position in which the first input terminal (106ᵢ. 206₁), respectively output terminal (108₁, 208₁), is connected to the second output terminal (108₂, 208₂), respectively input terminal (106₂, 206₂), by means of the conductors (136, 236),
**characterized in that** the conducting elements are conducting clamps (105, 205), and the support and the strips (105, 115, 150, 205, 230, 125, 160, 232) of the second part are designed to be clamped between the grips (105, 205) of the first part whatever the relative rotational position of the first and second part.

2. The device according to claim 1 wherein the first and second position are separated by 90°.

3. The device according to claim 2 wherein the actuating means (130, 230) comprise a uni-directional rotary motor.

4. The phase inversion device (100, 100', 200) according to one of claims 1 to 3 wherein:
- the first part comprises conducting circuits (120, 162, 164) insulated with respect to one another and connecting the strips (125, 160) of the supports (105) of the second part two by two;
- the second end of the conductors (136) is coupled to a conducting clamp (105) of the first part;
so that in the first position, the conducting circuits (120, 162, 164) connect the first terminals (106₁, 108₁) and the second terminals (106₂, 108₂) to one another by means of the conducting strips (125, 160) and the clamps (105), and in the second position, the conducting circuits (120, 162, 164) connect the first input terminal (106₁), respectively output terminal (108₁,), to the second output terminal (108₂), respectively input terminal (106₂), by means of the conducting strips (125, 160) and the clamps (105).

5. The device according to claim 4 wherein the insulating support (150) comprises two discs (155) and a shaft (158) connecting the latter.

6. The device according to claim 5 wherein two second conducting circuits (164) are partially located in the shaft (158) and connect a connecting strip (160) of a first disc (155₁) to a connecting strip (160) of the second disc (155₂).

7. The device according to one of claims 4 to 6 wherein the insulating support (150') comprises two parts able to be moved relatively to one another so that the discs (155) can have a positioning play with respect to one another.

8. The device according to claim 7 wherein the second conducting circuits (164) are partially located in the shaft (158) and comprise two portions (164ᵢ) movable with respect to one another, and wherein the second conducting circuits (164) comprise two end portions (164ᵢ) and a connecting conductor (176) designed to move in guided manner to enable movement of the end portions (164ᵢ) while keeping conduction between the latter, and the shaft (158) comprises means (178) for guiding the connecting conductor (176).

9. The device according to one of claims 4 to 8 wherein the insulating support (150') is partially moulded from casting (166) on the conducting circuits (164).

10. The device according to one of claims 1 to 9 wherein the conductors (136) connecting the terminals (106, 108) to the clamps (105) are at least partially flexible.

11. A phase inversion device (100, 100') according to one of claims 1 to 3 wherein:
- the first part comprises two bridges (215) of two conducting clamps (205);
- the conductors (236) connect the terminals (206ᵢ, 208ᵢ) to the conducting strips (232) of the second part;
so that, in the first position, the first, respectively second, bridge (215₁) connects a first and a second conducting strip (232', 232A), and in the second position, the first, respectively second, bridge (215₁,) connects a first and a third conducting strip (232', 232B), said third strip (2328) being different from the second strip (232A).

12. The device according to claim 11 wherein the inversion element (210) comprises two coaxial bars (220₁, 220₂), each bar (220ᵢ) supporting a pair of clamps (215ᵢ) and two supports (230ᵢ) each provided with three conducting strips (232Aᵢ, 232Bᵢ, 232'ᵢ), and wherein two conducting strips (232Aᵢ, 232Bᵢ) of the first support (230₁) are connected by a fixed conductor (238A, 238B) to two conducting strips (232A₂, 232B₂) of the second support (230₂).

13. The device according to claim 12 wherein the clamps (205) of each bridge (215) are diametrically opposite and housed in cavities (222) of each bar (220).

14. The device according to one of claims 12 to 13 wherein the two bars (220ᵢ) are connected by a shaft (226) and the actuating means (240) are coupled to the shaft (226) between the bars (220ᵢ).

15. The device according to one of claims 1 to 14 further comprising a third input terminal (106₃, 206₃) and a third output terminal (108₃, 208₃) connected to one another by a conductor (134, 244).

## Patentansprüche

1. Phasenumkehrvorrichtung (100, 100', 200) mit
- einer ersten und einer zweiten Eingangsklemme (106i, 206i),
- einer ersten und einer zweiten Ausgangsklemme (108i, 208i),
- einem Umkehrelement (110, 110', 210), das
○ einen ersten Abschnitt mit Leiterelementen (105, 205),
○ einen zweiten Abschnitt mit mindestens einem Isolierstoffträger (115, 150, 230) und darauf angeordneten Leiteranschlüssen (125, 160, 232) sowie
○ Mitführungsmittel zur drehwirksamen Verschiebung eines der beiden Abschnitte relativ zum anderen um eine Achse (AA) umfasst,
- Leitern (136, 236), von denen mindestens ein erstes Ende mit einer Klemme (106i, 206i, 108i, 208i) und das zweite Ende mit einem der Abschnitte des Umkehrelements (110, 110', 210) verbunden ist, sowie mit
- Betätigungsmitteln zum Antrieb der Mitführungsmittel des Umkehrelements (110, 110', 210) derart, dass die beiden Abschnitte eine erste Stellung, in der die ersten Klemmen (106i, 108₁, 206i, 208i) und die zweiten Klemmen (106i, 108i, 206i, 208i) über Leiter (136, 236) miteinander verbunden sind, sowie eine zweite Stellung einnehmen können, in der die erste Eingangsklemme (106i, 206i) bzw. Ausgangsklemme (108i, 208i) über Leiter (136, 236) mit der zweiten Ausgangsklemme (108i, 208i) bzw. Eingangsklemme (106i, 206i) verbunden ist,
**dadurch gekennzeichnet, dass** die Leiterelemente als leitende Kontaktzangen (105, 205) ausgebildet sind und der Träger sowie die Anschlüsse (105, 115, 150, 205, 230, 125, 160, 232) des zweiten Abschnitts so ausgebildet sind, dass sie unabhängig von der relativen Winkelstellung des ersten und des zweiten Abschnitts in die Kontaktzangen (105, 205) des ersten Abschnitts eingeführt werden können.

2. Vorrichtung nach Anspruch 1, bei der die erste und die zweite Stellung um 90° zueinander versetzt sind.

3. Vorrichtung nach Anspruch 2, bei der die Betätigungsmittel (130, 230) einen Rotationsmotor mit einer Drehrichtung umfassen.

4. Phasenumkehrvorrichtung (100, 100') nach einem der Ansprüche 1 bis 3, bei der
- der erste Abschnitt Leiterkreise (120, 162, 164) umfasst, die gegeneinander isoliert sind und die Anschlüsse (125, 160) der Träger (105) des zweiten Abschnitts paarweise miteinander verbinden,
- das zweite Ende der Leiter (136) mit einer leitenden Kontaktzange (105) des ersten Abschnitts verbunden ist,
derart, dass die Leiterkreise (120, 162, 164) in der ersten Stellung die ersten Klemmen (106₁, 108₁) und die zweiten Klemmen (106₂, 108₂) über die Leiteranschlüsse (125, 160) und Kontaktzangen (105) miteinander verbinden und diese Leiterkreise (120, 162, 164) in der zweiten Stellung die erste Eingangsklemme (106₁) bzw. Ausgangsklemme (108₁) über die Leiteranschlüsse (125, 160) und Kontaktzangen (105) mit der zweiten Ausgangsklemme (108₂) bzw. Eingangsklemme (106₂) verbinden.

5. Vorrichtung nach Anspruch 4, bei der der Isolierstoffträger (150) zwei Scheiben (155) und eine diese Scheiben verbindende Welle (158) umfasst.

6. Vorrichtung nach Anspruch 5, bei der die zweiten Leiterkreise (164) teilweise in der Welle (158) angeordnet sind und eine Anschlussklemme (160) einer ersten Scheibe (155₁) mit einer Anschlussklemme (160) der zweiten Scheibe (155₂) verbinden.

7. Vorrichtung nach einem der Ansprüche 4 bis 6, bei der der Isolierstoffträger (150') zwei Abschnitte (180) umfasst, die relativ zueinander verschoben werden können, derart dass die Scheiben (155) ein relatives Positionierspiel zueinander aufweisen können.

8. Vorrichtung nach Anspruch 7, bei der die zweiten Leiterkreise (164) teilweise in der Welle (158) angeordnet sind sowie zwei relativ zueinander verschiebbare Abschnitte (164i) umfassen, bei der die zweiten Leiterkreise (164) zwei Endabschnitte (164i) sowie einen Verbindungsleiter (176) umfassen, der geführt verschiebbar ist, um die Bewegung der Endabschnitte (164) ohne Unterbrechung der Leiterverbindung zwischen ihnen zu ermöglichen, und bei der die Welle (158) Mittel (178) zur Führung des Verbindungsleiters (176) umfasst.

9. Vorrichtung nach einem der Ansprüche 4 bis 8, bei der der Isolierstoffträger (150) teilweise auf die Leiterkreise (162, 164) aufgespritzt ist.

10. Vorrichtung nach einem der Ansprüche 1 bis 9, bei der die Verbindungsleiter (136) zwischen den Klemmen (106, 108) und den Kontaktzangen (105) zumindest teilweise flexibel ausgeführt sind.

11. Phasenumkehrvorrichtung (100, 100') nach einem der Ansprüche 1 bis 3, bei der
- der erste Abschnitt zwei Brücken (215) mit zwei leitenden Kontaktzangen (205) umfasst und
- die Leiter (236) die Klemmen (206i, 208i) mit den Leiteranschlüssen (232) des zweiten Abschnitts verbinden,
derart, dass in der ersten Stellung die erste bzw. zweite Brücke (215i) einen ersten und einen zweiten Leiteranschluss (232', 232A) miteinander verbindet und in einer zweiten Stellung die erste bzw. zweite Brücke (215i) einen ersten und einen dritten Leiteranschluss miteinander verbindet (232', 232B), welcher dritte Anschluss (232B) nicht mit dem zweiten Anschluss (232A) - übereinstimmt.

12. Vorrichtung nach Anspruch 11, bei der das Umkehrelement (210) zwei koaxial zueinander angeordnete Wellen (220₁, 220₂), welche Wellen (220i) jeweils ein Kontaktzangenpaar (215i) tragen, sowie zwei Träger (230i) umfasst, an denen jeweils drei Leiteranschlüsse (232Ai, 238Bi, 232'i) ausgebildet sind, und bei der zwei Leiteranschlüsse (232A₁, 232B₁) des ersten Trägers (230) über einen festen Leiter (238A, 238B) mit zwei Leiteranschlüssen (232A₂, 232B₂) des zweiten Trägers (230₂) verbunden sind.

13. Vorrichtung nach Anspruch 12, bei der die Kontaktzangen (205) jeder Brücke (215) diametral einander gegenüber angeordnet und in Ausnehmungen (222) jeder Welle (220) angeordnet sind.

14. Vorrichtung nach einem der Ansprüche 12 bis 13, bei der die beiden Wellen (220i) über eine Achse (226) miteinander verbunden und die Betätigungsmittel (240) zwischen den beiden Wellen (220i) mit der Achse (226) gekoppelt sind.

15. Vorrichtung nach einem der Ansprüche 1 bis 14 mit einer zusätzlichen dritten Eingangsklemme (106₃, 206₃) und einer zusätzlichen dritten Ausgangsklemme (108₃, 208₃), die über einen Leiter (134, 244) miteinander verbunden sind.
